(19) Europäisches Patentamt

European Patent Office

Office européen des brevets

(11) **EP 1 051 858 B1**

(12) **EUROPEAN PATENT SPECIFICATION**

(45) Date of publication and mention
of the grant of the patent:
**05.09.2001 Bulletin 2001/36**

(51) Int Cl.⁷: **H04N 9/31**, G03B 21/62,
G02B 5/32

(21) Application number: **98904759.2**

(22) Date of filing: **29.01.1998**

(86) International application number:
**PCT/US98/01736**

(87) International publication number:
**WO 99/39513 (05.08.1999 Gazette 1999/31)**

(54) **PROJECTION TELEVISION WITH HOLOGRAPHIC SCREEN AND PARTLY OCCLUDED PROJECTION LENS**

PROJEKTIONSFERNSEHGERÄT MIT HOLOGRAPHISCHEM BILDSCHIRM UND TEILWEISE ABGEDECKTER PROJEKTIONSLINSE

TELEVISEUR A PROJECTION A ECRAN HOLOGRAPHIQUE ET A LENTILLES DE PROJECTION PARTIELLEMENT MASQUEES

(84) Designated Contracting States:
**DE FR GB IT**

(43) Date of publication of application:
**15.11.2000 Bulletin 2000/46**

(73) Proprietor: **Thomson Licensing S.A.**
**92648 Boulogne Cedex (FR)**

(72) Inventors:
• **HALL, Estill, Thone, Jr.**
  **Fishers, IN 46038 (US)**
• **PFILE, Wendy, Rene**
  **Indianapolis, IN 46226 (US)**

(74) Representative: **Ruellan-Lemonnier, Brigitte**
**THOMSON multimedia,**
**46 quai A. Le Gallo**
**92648 Boulogne Cédex (FR)**

(56) References cited:
**EP-A- 0 671 653**      **WO-A-95/34832**
**WO-A-96/07953**      **US-A- 4 004 093**
**US-A- 5 046 793**

• **PATENT ABSTRACTS OF JAPAN vol. 97, no. 7 & JP 09 073132 A (CASIO COMPUTER CO LTD)**
• **PATENT ABSTRACTS OF JAPAN vol. 18, no. 333 (P-1759) & JP 06 082625 A (RICOH CO LTD)**

## Description

## BACKGROUND

### Field of the Invention

This invention relates to the field of projection television receivers, and in particular to a projection television receiver having a holographic screen and projection lenses that have been modified to enhance brightness uniformity across the viewing field of the screen, including by occluding central portions of the projection tube pupil lenses.

### Background Information

Projection television screens need at least three image projectors to form respective images of different colors, for example, red, blue and green. A projection screen receives images from the three projectors on a first side and displays the images on a second side with controlled light dispersion of all the displayed images. One of the projectors, usually green and usually in the center of an array of projectors, has a first optical path in a substantially orthogonal orientation with the screen. At least two of the projectors, usually red and blue and usually positioned on opposite sides of the central green projector in the array, have respective optical paths converging toward the first optical path in a non orthogonal orientation relative to the screen, defining angles of incidence. As a result of this positioning scheme for the projectors, the image appearing on the screen is color shifted when viewed from different angles and the image is brighter at the center of the screen than at the edges of the screen or exhibits non-uniform brightness. It would be advantageous to reduce color shift and to improve brightness uniformity in projection screen television systems.

Color shift is defined as the change in the red/blue or green/blue ratio of a white image formed at the center of a projection screen by projected images from red, green and blue projection tubes, when viewed at different angles in the horizontal plane, by observations made at the peak brightness vertical viewing angle. Color shift results from the non orthogonal relationship of the red and blue projectors, relative to the screen and to the green projector. As a result of the color shift, color tones may differ at every position on the screen. The condition in which the color tone difference is large is often referred to as poor white uniformity. The smaller the color shift, the better the white uniformity.

Color shift is denoted by a scale of numbers, in which lower numbers indicate less color shift and better white uniformity. In accordance with a common procedure, values for the red, green and blue luminance are measured at the screen center from a variety of horizontal viewing angles, typically from at least about -40° to +40°, to as much as about -60° to +60°, in 5° or 10° increments. The positive and negative angles represent horizontal viewing angles to the right and left of screen center, respectively. These measurements are taken at the peak vertical viewing angle. The red, green and blue data is normalized to unity at 0°. One or both of the following equations (I) and (II) are evaluated at each angle:

$$C(\Theta) = 20 \cdot \log_{10}\left(\frac{red(\Theta)}{blue(\Theta)}\right); \qquad \text{(I)}$$

$$C(\Theta) = 20 \cdot \log_{10}\left(\frac{green(\Theta)}{blue(\Theta)}\right) \qquad \text{(II)}$$

where θ is any angle within a range horizontal viewing angles, C(θ) is the color shift at angle θ, red(θ) is the red luminance level at angle θ, blue(θ) is the blue luminance level at angle θ and green(θ) is the green luminance level at angle θ. The maximum of these values is the color shift of the screen.

In general, color shift-should be no larger than 5, nominally, on any commercially acceptable screen design. Other engineering and design constraints may sometimes require that the color shift be somewhat higher than 5, although such color shift performance is not desirable and usually results in a perceptibly inferior picture with poor white uniformity.

Screens for projection television receivers are generally manufactured by an extrusion process utilizing one or more patterned rollers to shape the surface of a thermoplastic sheet material. The configuration is generally an array of lenticular elements, also referred to as lenticules and lenslets. The lenticular elements may be formed on one or both sides of the same sheet material or on one side only of different sheets which can then be permanently combined as a laminated unit or otherwise mounted adjacent to one another so as to function as a laminated unit. In many designs, one of the surfaces of the screen is configured as a fresnel lens to provide light diffusion. Prior art efforts to reduce color shift and improve white uniformity have focused exclusively on two aspects of the screen. One aspect is the shape and disposition of the lenticular elements. The other aspect is the extent to which the screen material, or portions thereof, are doped with light diffusing particles to control light diffusion. These efforts are exemplified by the following patent documents.

In US 4,432,010 and US 4,536,056, a projection screen includes a light-transmitting lenticular sheet having an input surface and an exit surface. The input surface is characterized by horizontally diffusing lenticular profiles having a ratio of a lenticulated depth Xv to a close-axis-curvature radius R1 (Xv/R1) which is within the range of 0.5 to 1.8. The profiles are elongated along the optical axis and form aspherical input lenticular lenses.

The use of a screen with a double sided lenticular lens is common. Such a screen has cylindrical entrance lenticular elements on an entrance surface of the screen, cylindrical lenticular elements formed on an exit surface of the screen and a light absorbing layer formed at the light non convergent part of the exit surface. The entrance and the exit lenticular elements each have the shape of a circle, ellipse or hyperbola represented by the following equation (III):

$$Z(x) = \frac{Cx^2}{1+[1-(K+1)C^2x^2]^{\frac{1}{2}}} \qquad (III)$$

wherein Cis a main curvature and Kis a conic constant.

Alternatively, the lenslets have a curve to which a term with a higher order than 2nd order has been added.

In screens making use of such a double sided lenticular lens, it has been proposed to specify the position relationship between the entrance lens and exit lens. or the lenticular elements forming the lenses. It has been taught, for example in US 4,443,814, to position the entrance lens and exit lens in such a way that the lens surface of one lens is present at the focal point of the other lens. It has also been taught, for example in JP 58-59436, that the eccentricity of the entrance lens be substantially equal to a reciprocal of the refractive index of the material constituting the lenticular lens. It has further been taught, for example in US 4,502,755, to combine two sheets of double-sided lenticular lenses in such a way that the optic axis planes of the respective lenticular lenses are at right angles with respect to one another, and to form such double sided lenticular lenses in such a way that the entrance lens and exit lens at the periphery of one of the lenses are asymmetric with respect to the optic axis. It is also taught, in US 4,953,948, that the position of light convergence only at the valley of an entrance lens should be offset toward the viewing side from the surface of an exit lens so that the tolerance for misalignment of optic axes and the difference in thickness can be made larger or the color shift can be made smaller.

In addition to the problem of color shift, projection televisions may fail to provide an image which is sufficiently bright through a sufficient range of horizontal viewing angles from which users may view the screen. Most attempts at improving brightness have focused on improving the overall screen gain which is defined as the quotient of light intensity directed from the source toward the rear of the viewing surface, and the light intensity from the front of the viewing surface toward the viewer, measured orthogonal or normal to the screen.

Various proposals for improving projection screen performance by enhancing the gain of the pictures and ensuring appropriate visual fields in both the horizontal and vertical directions can be found in US 5,196,960. US 5,196,960 teaches a double sided lenticular lens sheet comprising an entrance lens layer having an entrance lens, and an exit lens layer having an exit lens whose lens surface is formed at the light convergent point of the entrance lens, or in the vicinity thereof. The entrance lens layer and the exit lens layer are each formed of a substantially transparent thermoplastic resin and at least the exit layer contains light diffusing fine particles. A difference exists in the light diffusion properties between the entrance lens layer and the exit lens layer. A plurality of entrance lenses comprise a cylindrical lens. The exit lens is formed of a plurality of exit lens layers, each having a lens surface at the light convergent point of each lens of the entrance lens layer, or in the vicinity thereof. A light absorbing layer is also formed at the light non convergent part of the exit lens layer. This screen design is said to have a greater screen gain and hence an overall brighter image.

Although the overall gain and brightness of a lenticular screen is better than that of a simple diffuse screen, another performance issue of a projection television design is the relative difference in brightness between the screen edges and the screen center under comparable degrees of illumination. Typically the picture at the corners is not as bright as at the center of the picture. The difference in relative brightness occurs partly because the optical path is shorter from the projectors to the center of the screen than from the projectors to the edges of the screen. The difference also occurs partly because the projectors are generally oriented toward the center of the screen, their beams typically converging at the center. The projectors thus illuminate the edges and corners both with less light intensity (due to distance) and less directly than at the center.

One method for dealing with edge brightness is to use a fresnel lens behind the diffuse or lenticular panel of the screen. The fresnel lens is a collimating lens having a focal length equal to the axial distance between the collimating lens and the exit lens pupils of the projectors. The object is to redirect light rays diverging from the projectors such that the rays along the projection axis from each projection tube emerge from the screen parallel to the axis.

A fresnel lens is subdivided into ridges that are progressively more inclined toward the edges of the lens, having a slope substantially equal to the slope of a solid collimating lens, the specific angles of the ridges being chosen such that refraction at the air/glass (or air/plastic) interfaces at the surface of the lens bend the rays in the required direction. In particular, rays diverging from the center axis of the screen are bent inwardly toward the center axis to emerge parallel to the center axis. This requires progressively greater refraction at the edges of the screen and no refraction at the center.

It is known in a conventional projection screen to increase the focal length of the fresnel ridges proceeding outwardly from the center of the picture. Off-axis light rays at the screen edges are bent beyond parallel to the center axis, and are directed somewhat inwardly toward the center axis. This makes the edges of the picture appear brighter provided the screen is viewed along the center axis, but is not helpful for viewing from other positions.

Another brightness variation problem can occur in projection televisions in which a fresnel is arranged to direct light in the direction of a user viewing from a point above the center of the screen, for example in a projection television having a relatively low cabinet. This is accomplished by offsetting the centerline of the fresnel upwardly relative to the center of the screen. Although this can improve relative brightness, especially at the corners, the top of the screen also appears generally brighter than the bottom of the screen.

Despite many years of aggressive developments in projection screen design, the improvements have been incremental, at best. Moreover, there has been no success in surpassing certain benchmarks. The angle of incidence defined by the geometric arrangement of the image projectors, referred to as angle $\alpha$ herein, has generally been limited to the range of greater than 0° and less than or equal to about 10° or 11°. The size of the image projectors and/or their optics, makes angles of $\alpha$ close to 0° essentially impossible. In the range of the angles of $\alpha$ less than about 10° or 11°, the best color shift performance which has been achieved is about 5, as determined in accordance with equations (I) and (II). In the range of the angles of a greater than about 10° or 11°, the best color shift performance which has been achieved is not commercially acceptable. In fact, projection television receivers having angles of $\alpha$ greater than 10° or 11° are not known to have been marketed.

Small angles of incidence ($\alpha$) have a significant and undesirable consequence, namely a very large cabinet depth is needed to house a projection television receiver. The large depth is a direct result of the need to accommodate optical paths having small angles of incidence ($\alpha$). For a given size of the image projectors and optical elements, the angle of incidence can be reduced only by increasing the length of the optical path between the image projectors or their optics and the screen. Techniques for reducing the size of projection television cabinets generally rely on mirrors for folding long optical paths. The color shift success of such efforts is ultimately limited because there is a low limit to the range of possible angles of incidence.

Polaroid Corporation sells a photo polymer designated DMP-128® , which Polaroid Corporation can manufacture as a three dimensional hologram, using proprietary processes. The holographic manufacturing process is described, in part, in US 5,576,853. Holographic photo polymers are generally useful for recording photographic images by splitting coherent light into an illumination beam and a reference beam. The illumination beam irradiates the subject. The reflected beam from the subject and the reference beam, which bypasses the subject, irradiate the photo polymer medium, which contains a developable light sensitive photographic composition. The light waves of the two beams interfere, that is, by constructive and destructive interference they produce a standing wave pattern of sinusoidal peaks which locally expose the photographic composition, and nulls which do not locally expose the composition. When the photographic medium is developed, a corresponding interference pattern is recorded in the medium. By illuminating the medium with a coherent reference beam, the image of the subject is reproduced and can be viewed over a range of apparent angles.

The recorded interference pattern of a hologram representing a typical photographic subject is complex because light from all the illuminated points on the subject interfere with the reference beam at all points on the hologram. It would be possible by recording the image of a blank "subject" (effectively by interfering two reference beams), to make a blank hologram, also known as a sine grating, in which the interference pattern is more regular. Thus, the interference pattern would form a diffraction grating which has a resolution which is fine when compared to the pitch of a projection screen which utilizes macro sized lenticular elements shaped to bend or refract light in a particular direction from rearward projection tubes.

A three dimensional holographic screen for a projection television was proposed in principle by Polaroid Corporation, as one of many suggestions made during efforts to establish a market for the DMP-128® photo polymer holographic product. The proposal was based on advantages which Polaroid Corporation expected in terms of higher brightness and resolution, lower manufacturing cost, lower weight, and resistance to the abrasion to which two-piece screens are subjected during shipping. Polaroid Corporation never proposed any particular holographic configuration for the volume holographic elements which might make up such a holographic projection television screen, and never even addressed the problem of color shift in projection television screens of any type, holographic or otherwise.

Overall, despite years of intensive development to provide a projection television receiver having a screen with a color shift less than 5, even significantly less than 5, or having a color shift as low as 5 for angles of $\alpha$ even greater than 10° or 11°, there have been no advances in solving the color shift problem other than incremental changes in the shapes and positions of lenticular elements and diffusers in conventional projection screens. Moreover, despite suggestions that three dimensional holograms might be useful for projection screens, although for reasons having nothing to do with color shift, there has been no effort to provide projection televisions with three dimensional holographic screens. A long felt need for a projection television receiver having significantly improved color shift performance, which can also be built into a significantly smaller cabinet, has remained unsatisfied.

## SUMMARY

According to an inventive aspect, it is an object of the invention to exploit the substantially improved gain of a holographic screen in a projection system, and in so doing to optimize the optical system to improve color distribution. A projection television according to the present invention is defined by claims 1 and 13. In particular, part of the brightness of each of the projection tubes is given up by occluding an area of the lens for each tube along its center axis. This improves overall color distribution without incurring a reduction in brightness that could otherwise detract from the brightness necessary for optimal viewing.

A projection television receiver in accordance with the inventive arrangements taught herein provides such a significant improvement in color shift performance, measured in orders of magnitude, that a color shift of 2 or less can be achieved with projection television receivers having angles of incidence $\alpha$ in the range of less than 10° or 11°. Moreover, the color shift performance is so significant that commercially acceptable projection television receivers having angles of incidence up to about 30° can be provided, in much smaller cabinets. The color shift performance of such large $\alpha$ angle receivers is at least as good as conventional small $\alpha$ angle receivers, for example having a color shift of 5, and can be expected to approach or even reach values as low as about 2, as in the small $\alpha$ angle receivers.

These results are achieved by forsaking the extruded lens screen technology altogether. Instead, a projection television receiver in accordance with an inventive arrangement has a screen formed by a three dimensional hologram formed on a substrate, for example, a polyethylene film, such as Mylar® .

Such a three dimensional holographic screen was originally developed for its expected advantages in terms of higher brightness and resolution, and lower manufacturing cost, lower weight and resistance to abrasion to which two-piece screens are subjected, for example during shipping. The discovery of the color shift performance of the three dimensional holographic screen came about when testing to determine if the optical properties of the three dimensional screen would be at least as good as a conventional screen. The color shift performance of the three dimensional holographic screen, as measured by equations (I) and (II), was unexpectedly low. The barriers which limited prior art improvements to incremental steps had been eliminated altogether. Smaller cabinets with projection geometry characterized by larger $\alpha$ angles of incidence can now be developed.

In addition to increased color shift performance, three dimensional holographic screens exhibit a greater increase in overall gain than is afforded by conventional extruded lens projection screens. The increased brightness afforded by the holographic screen allows for modification of the projectors in order to make the overall brightness of the screen more uniform. This is accomplished by occluding the center of the projector lenses thus decreasing the brightness of the center of the image projected onto the screen. Although conventional extruded lens projection screens could be modified in this way, a conventional screen does not exhibit a great enough overall brightness to afford for any loss of brightness along any point of the viewing field of the screen.

A projection television having the unexpected properties associated with three dimensional holographic screens, and in accordance with the inventive arrangements taught herein, comprises: at least three image projectors for respective images of different colors each projector having a partially occluded lens; a projection screen formed by a three dimensional hologram disposed on a substrate, the screen receiving images from the projectors on a first side and displaying the images on a second side with controlled light dispersion of all the displayed images; one of the projectors having a first optical path in a substantially orthogonal orientation with the screen and at least two of the projectors having respective optical paths converging toward the first optical path in a non orthogonal orientation defining angles of incidence; and, the three dimensional hologram representing a three dimensional array of lenticular elements having a configuration effective for reducing color shift in the displayed images, the screen having a color shift less than or equal to approximately 5 for all the angles of incidence in a range greater than 0° and less than or equal to approximately 30°, as determined by the maximum value obtained from at least one of the following expressions:

$$C(\Theta) = 20 \cdot \log_{10}(\frac{red(\Theta)}{blue(\Theta)});$$

$$C(\Theta) = 20 \cdot \log_{10}(\frac{green(\Theta)}{blue(\Theta)})$$

where θ is any angle within a range horizontal viewing angles, C(θ) is the color shift at angle θ, red(9) is the red luminance level at angle θ, blue(θ) is the blue luminance level at angle θ and green(θ) is the green luminance level at angle θ. The color shift of the screen can be expected to be less than 5, for example, less than or equal to approximately 4, 3 or even 2.

In terms of the known barrier at an angle of incidence of about 10° or 11°, the color shift of the screen is less than or equal to approximately 2 for all the angles of incidence in a first sub-range of angles of incidence greater than 0° and less than or equal to approximately 10°; and, the color shift of the screen is less than or equal to approximately 5 for all the angles of incidence in a second sub-range of angles of incidence greater than approximately 10° and less than or equal to approximately 30°.

The screen further comprises a light transmissive reinforcing member, for example, of an acrylic material in a layer having a thickness in the range of approximately 2 - 4 mm. The substrate comprises a highly durable, transparent, water-repellent film, such as a polyethylene terephthalate resin film. The substrate can be a film having a thickness in the range of about 1 - 10 mils. A thickness of about 7 mils has been found to provide adequate support for the three dimensional hologram. The thickness of the film is not related to performance. The three dimensional hologram has a thickness in the range of not more than approximately 20 microns. The projection television may further comprise one or more mirrors between the image projectors and the screen.

The projection screen is specifically arranged to improve brightness and uniformity over a wide range of angles of incidence of the projection beams. This is accomplished using a holographic screen as described, which exhibits substantially higher gain proceeding toward the edges. The gain of the holographic screen can be further enhanced by backing the screen with one or more linear fresnel panels having ridges that progressively vary in focal length from the center to the edges. The increase in gain of the screen allows the lenses of the projectors to be totally or partially occluded in the center. Although this dims the center of the image on the screen, the gain afforded by the holographic screen is such that the loss of brightness at the center of the screen is affordable and increases the center to edge ratio of brightness or provides a more uniform brightness across the screen.

## BRIEF DESCRIPTION OF THE DRAWINGS

FIGURE 1 is a diagrammatic representation of a projection television in accordance with the inventive arrangements taught herein.

FIGURE 2 is a simplified diagram of projection television geometry useful for explaining the inventive arrangements.

FIGURE 3 is a side elevation of a reinforced projection screen according to the inventive arrangements.

FIGURE 4 is a schematic representation of an alternative embodiment of a projection screen with two superimposed holograms containing gain variations across horizontal and vertical viewing angles, respectively.

FIGURE 5 is a graphic representation of the proportion of peak white brightness as a function of horizontal viewing angle, using a horizontally varied holographic element with and without the stacked vertically varying holographic element.

FIGURE 6 is a schematic drawing of an alternative embodiment having stacked holographic and collimating screen layers.

FIGURE 7 is a front elevation of an occluded lens of one of the projectors.

FIGURE 8 is a schematic drawing of the screen and a table which gives the brightness of the numerically labeled points on the screen as compared to the brightness at the center of the screen.

## DERAILED DESCRIPTION OF THE PREFERRED EMBODIMENTS

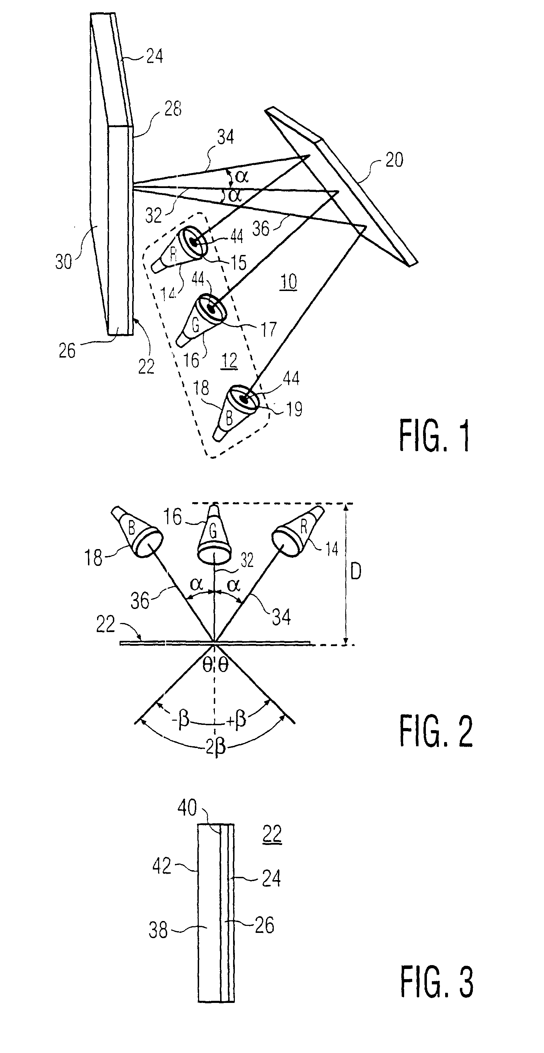

A projection television receiver 10 is illustrated diagrammatically in FIGURE 1. An array 12 of projection cathode ray tubes 14, 16 and 18 provide red, green and blue images respectively. The cathode ray tubes are provided with respective lenses 15, 17 and 19 each having an occlusion 44 at their centers. The projected images are reflected by a mirror 20 onto a projection screen 22. Additional mirrors can also be utilized, depending on the particular geometry of the optical paths. The green cathode ray tube 16 projects the green image along an optical path 32, which in this example is oriented substantially orthogonal to screen 22. In other words, the centerline of the optical path is at right angles to the screen. The red and blue cathode ray tubes have respective optical paths 34 and 36, which converge toward the first optical path 32 in a non orthogonal orientation defining angles of incidence $\alpha$. The angles of incidence introduce the problem of color shift.

The screen 22 comprises a three dimensional hologram 26 disposed on a substrate 24. Hologram 26 is a print of a master hologram substantially forming a diffraction pattern that manages the distribution of light energy from the three projectors 14, 16, 18, and can be made variable across the width and/or height of the screen. In a preferred arrangement, the hologram is a "center only" hologram that tends to reorient incident light. The screen receives images from the projectors on a first, entrance surface side 28 and displays the images on a second, exit surface side 30, with controlled light dispersion of all the displayed images. The substrate is preferably a highly durable, transparent, water-repellent film, such as a polyethylene terephthalate resin film. One such film is available from E. I. du Pont de Nemours & Co. under the trademark Mylar® . The film substrate has a thickness in the range of about 1 - 10 mils, equivalent to about 0.001 - 0.01 inches or about 25.4 - 254 microns. A film having a thickness of about 7 mils has been found to provide adequate support for the three dimensional hologram disposed thereon. The thickness of the film does not affect screen performance in general or color shift performance in particular, and films of different thickness may be utilized. The three dimensional hologram 26 has a thickness of not more than approximately 20 microns.

Three dimensional holographic screens are available from at least two sources. Polaroid Corporation utilizes a proprietary, wet chemical process to form three dimensional holograms in its DMP-128 photo polymer material. The process includes forming a diffractive holographic pattern in the photo polymer material, which pattern can include variations in screen gain across the range of horizontal and/or vertical viewing angles. A master hologram can be prepared by exposing photo polymer holographic media to coherent light including a reference beam and a beam reflected from a planar pattern having light-to-dark variations corresponding to the desired variation in gain.

A preferred embodiment of the three dimensional holographic screens used in the projection television receivers described and claimed herein were manufactured by the Polaroid Corporation wet chemical process, in accordance with the following performance specifications:

Horizontal half viewing angle: $38° \pm 3°$,
Vertical half viewing angle: $10° \pm 1°$,
Screen gain: $\geq 8$,
Color shift: $\leq 3$,

where the horizontal and vertical viewing angles are measured conventionally, screen gain is the quotient of light intensity directed from the source toward the rear of the viewing surface, and light intensity from the front of the viewing surface toward the viewer, measured orthogonal to the screen, and color shift is measured as described above. The extraordinary color shift performance of the three dimensional holographic projection screen was, as explained in the Summary, wholly unexpected.

FIGURE 2 is a simplified projection television diagram, omitting the mirror and lenses, for explaining color shift performance. The optical axes 34 and 36 of the red and blue cathode ray tubes 14 and 18 are aligned symmetrically at angles of incidence $\alpha$ with respect to the optical axis 32 of the green cathode ray tube 16. The minimum depth D of a cabinet is determined by the distance between the screen 22 and the rear edges of the cathode ray tubes. It will be appreciated that if the angle $\alpha$ is to become smaller, the cathode tubes must be placed closer together and/or must be spaced further from the screen to provide clearance for the tubes. At a sufficiently small angle $\alpha$, such interference cannot be avoided. This increases the minimum depth D of a cabinet. Conversely, as the angle $\alpha$ gets larger, the cathode ray tubes can be moved closer to the screen 22, reducing the minimum depth D of a cabinet.

On the viewing side of the screen 22, two horizontal half viewing angles are designated $-\beta$ and $+\beta$. Together, a total horizontal viewing angle of $2\beta$ is defined. The half viewing angles may typically range from $\pm 40°$ to $\pm 60°$. Within each half angle are a plurality of specific angles $\theta$, at which color shift can be measured and determined, in accordance with equations (I) and (II) explained above.

In terms of the known barrier at an angle of incidence of about 10° or 11°, the color shift of the three dimensional holographic screen is less than or equal to approximately 2 for all the angles of incidence in a first sub-range of angles of incidence greater than 0° and less than or equal to approximately 10°; and, the color shift of the screen is less than or equal to approximately 5 for all the angles of incidence in a second sub-range of angles of incidence greater than approximately 10° and less than or equal to approximately 30°. It is expected that a color shift of less than or equal to approximately 2, as in the first sub-range, can also be achieved in the second sub-range of larger angles of incidence.

With reference to FIGURE 3, the substrate 24 comprises a transparent film, such as Mylar® , as described above. The photo polymer material from which the three dimensional hologram 26 is formed is supported on the film layer 24. A suitable photo polymer material is DMP-128® .

The screen 22 may further comprise a light transmissive reinforcing member 38, for example, of an acrylic material, such as polymethylmethacrylate (PMMA). Polycarbonate materials can also be used. The reinforcing member 38 is presently a layer having a thickness in the range of approximately 2 - 4 mm. The screen 22 and the reinforcing member are adhered to one another throughout the mutual boundary 40 of the holographic layer 26 and the reinforcing member 38. Adhesive, radiation and/or thermal bonding techniques may be utilized. The surface 42 of the reinforcing layer may also be treated, for example by one or more of the following: tinting, anti-glare coatings and anti-scratch coatings.

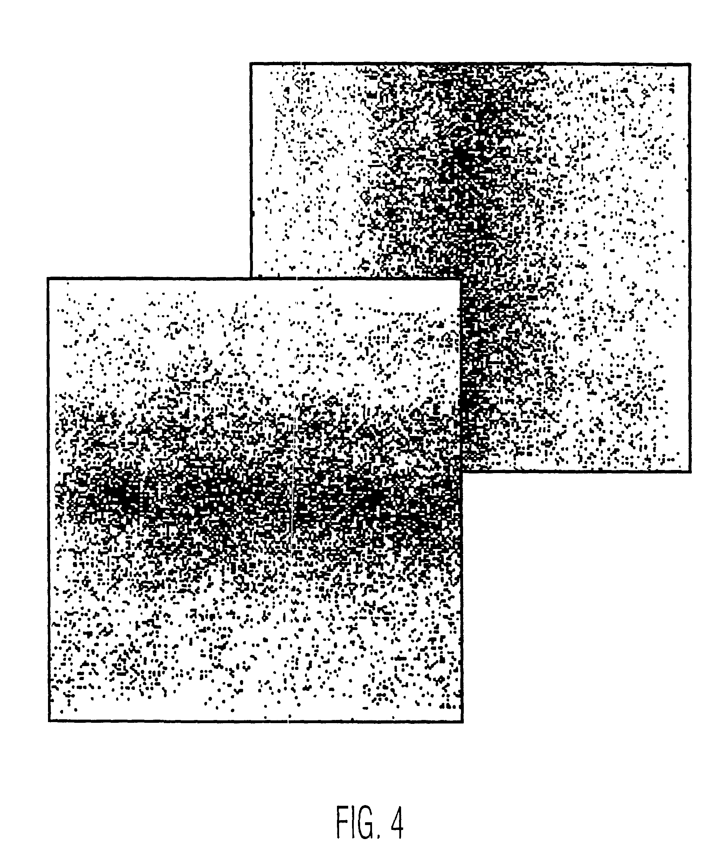

Various surfaces of the screen and/or its constituent layers may be provided with other optical lenses or lenticular arrays to control aspects of the projection screen bearing on performance characteristics other than color shift performance, as is known to do with conventional projection screens, without impairing the improved color shift performance of the three dimensional holographic projection screen. FIGURE 4 illustrates a first such variation wherein at least two holograms are superimposed or stacked. According to the example shown, a first hologram having a horizontal gain variation across a viewing field of $\pm 40°$ is stacked with a second hologram having a vertical gain variation across a field of $\pm 20°$. The gain variations are suggested by shading in the drawing, but when not illuminated the actual holographic elements simply appear to be diffuse across their surfaces. The result of superimposing horizontal and vertical gain variation holograms is substantially equivalent to a center-only hologram; however, the brightness level is varied at different rates across the horizontal span and the vertical span, because the horizontal span is substantially larger than the vertical span.

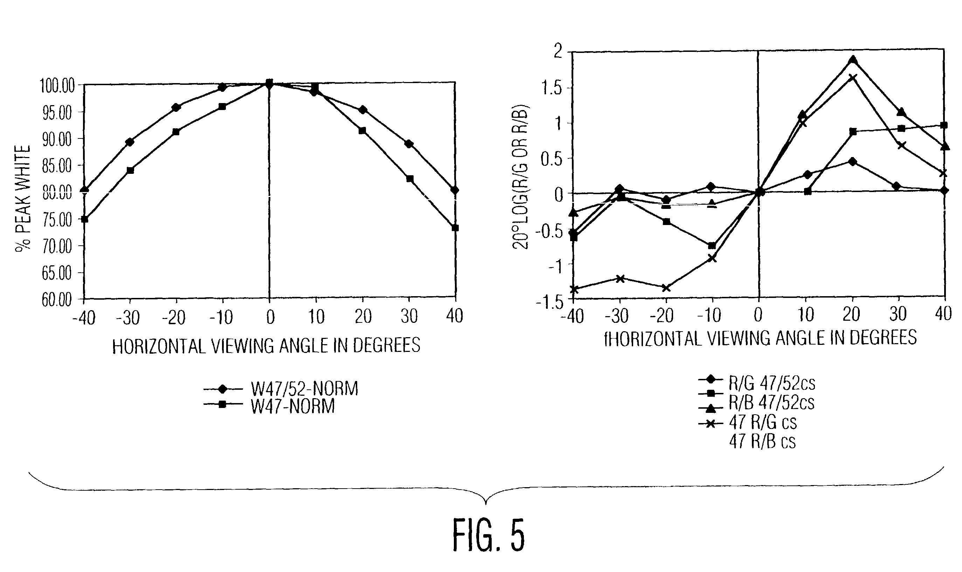

FIGURE 5 is a graph of measured screen brightness as a percentage of peak white brightness through a horizontal viewing span of $\pm 40°$, at a point in the center of the screen. The two lines on the graph represent the brightness using only a horizontally varying hologram and brightness using stacked horizontally and vertically varying holograms. The horizontal brightness variation with stacked holograms is substantially equal or slightly improved over the performance of the horizontal hologram alone.

In designing a holographic screen for a variety of performance domains, it can be difficult to make a screen that implements all desired performance characteristics at once. Stacking allows the separate handling of different demands, such as vertical and horizontal variations in gain. This arrangement is not limited to two stacked holograms, but is also applicable to additional stacked holograms, for example to control other aspects of light transmission through the screen.

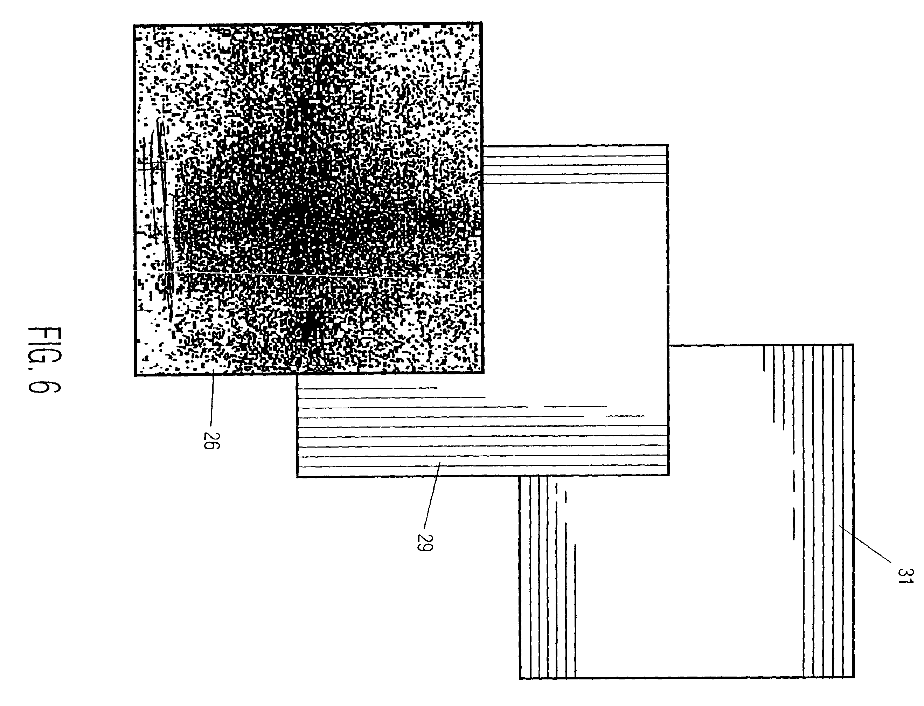

FIGURE 6 illustrates a further variation in which a center-only hologram (i.e., having horizontal and vertical gain variation) is stacked with linear fresnels for effecting horizontal and rotated vertical collimation. This embodiment has favorable cost implications in that linear fresnels can be embossed or roller extruded inexpensively as compared with a circular fresnel. A circular fresnel can account for as much as 60% of the cost of a conventional screen. A linear fresnel costs about 25% of the cost of a circular one. Therefore, a 30% cost savings is possible (i.e., (25%+25%)*60% = 30%). As with the horizontal and rotated holograms as discussed above, the linear fresnels can be varied across the horizontal and/or vertical viewing span as necessary, for example to vary the focal lengths independently in the vertical and horizontal spans. The two stacked linear fresnels can be placed in either order behind the holographic element.

A holographic screen element exhibits substantially improved gain as compared to a lenticular screen, whether a single hologram, stacked holograms or a combination hologram and conventional stacked linear fresnel sheet are utilized. However, like a lenticular screen the holographic screen is responsive to the illumination afforded by the projection tubes and associated optics. The illumination incident on the holographic screen from the optics is brightest along the projection axis of each tube. This is one aspect of the problem of color balance.

Another aspect of the color balance problem is due to the fact that although a particular screen may be very efficient in gathering the incident light and dispersing the light in the intended direction (e.g., a holographic screen may be 99.9% efficient), the screen tends to be nearly transparent to the remaining fraction of light. The screen fails to gather this light due to the effects of Raleigh Scattering, the same effect which colors the day sky blue and the sunset sky red. In the case of projection from a large, diffuse source of light, such as a CRT, the effect on the image is fairly low level and can be addressed by improved holographic efficiency, or the addition of weak diffusion material. In the case of projection from small, focused light sources, such as in LCD or DMD projection, the problem is more severe. The blue and green components are spread out by the holograph and generally do not produce a very apparent bright spot. Light from the red source, however, is not spread out well by the holograph and produces an apparent bright red spot on the screen. The lost or scattered portion of the light produces a bright area in the image corresponding to the position of the light source in the rear, Occluding an area at and adjacent to the center of the projection lens of the red light source eliminates this problem.

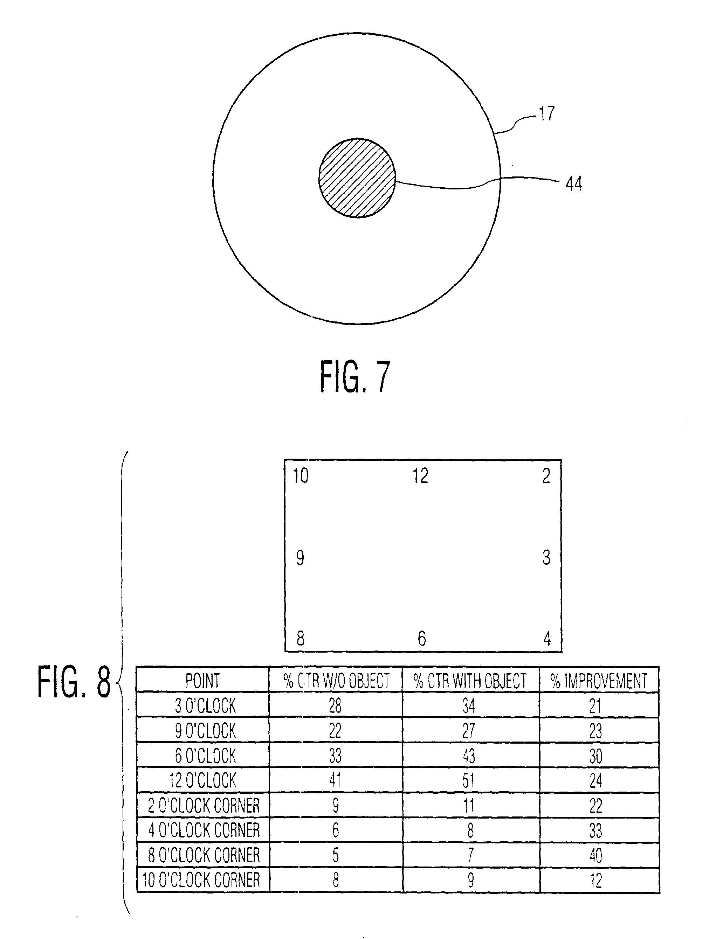

According to an inventive aspect, the excellent gain of a holographic screen permits the problem to be corrected by modifying the projector lenses 15,17 and 19 to reduce illumination along the centerline of each projection axis. This is accomplished by partially or totally occluding an area at the center of each lens. As shown in FIGURE 7, the center of lens 17 is occluded by placing an opaque object directly in the center of lens 17. Since the occlusion is not placed at a location where light from the projector is coming to focus, the occlusion is not visible on the screen, and the entire image from the projection CRT is focused using the remaining unoccluded portion of the lens. However, some light (i.e., the rays that are along the axis) is blocked, thus reducing the brightness of the spot that would otherwise occur due to scattering and/or inefficiencies of the projection screen.

FIGURE 8 is a table which gives the intensity of the light at numerically labeled points on the screen as a percentage of the intensity of the light at the center of the screen. The second column from the left lists the percentage brightness without the occlusion, while the third column from the left lists the percentage brightness with the occlusion. These measurements were taken using a circular occlusion about 0.25" in diameter on the lens, which is about 3.0" in diameter. For example, the 3 o'clock position on the screen is only 28% as bright as the center of the screen without the lens being occluded, but is 34% as bright as the center with the lens occluded. In general, occlusion of the lens will lead to an improvement in brightness uniformity of 22% along the major axis (the 3 and 9 o'clock positions); 27% along the minor axis (the 6 and 12 o'clock positions); and 27% in the corners (the 2,4,8, and 10 o'clock positions).

This inventive aspect preferably is applied to a holographic screen. Occluding the lens of a conventional lenticular screen would have the effect of reducing centerline brightness. However, conventional screens do not have the gain of a holographic screen and reducing centerline brightness in this manner would unduly darken the image.

The invention having been disclosed in connection with the foregoing variations and examples, additional variations will now be apparent to persons skilled in the art. The invention is not intended to be limited to the variations specifically mentioned, and accordingly reference should be made to the appended claims rather than the foregoing discussion of preferred examples, to assess the scope of the invention in which exclusive rights are claimed.

**Claims**

1. A projection television, comprising:

    a plurality of image projectors (14, 16, 18) each projector forming an image on a screen (22) and having a lens (15, 17, 19) with an occluded center area (44); and,
    the screen (22) being formed by at least one hologram (26) disposed on a substrate (24) superimposed on at least one light transmissive panel (38), said screen controlling the light dispersion of said displayed images, wherein said screen produces an overall gain across a field of view of the screen, whereby brightness uniformity is improved across said field of view of the screen.

2. The projection television of claim 1, wherein the screen (22) comprises at least two holograms stacked or. one another, wherein said at least two holograms have gain variations across horizontal and vertical spans of the field of view, respectively.

3. The projection television of claim 1, wherein the screen (22) comprises at least one fresnel element superimposed on said at least one hologram.

4. The projection television of claim 3, comprising at least two fresnel elements (29, 31) stacked behind the hologram (26), the at least two fresnel elements having independent collimating effects that are superimposed.

5. The projection television of claim 4, wherein the at least two fresnel elements (29, 31) have varying optical properties across vertical and horizontal spans of the field of view, respectively.

6. The projection television of claim 5, wherein the at least two fresnel elements (29, 31) have varying focal length across vertical and horizontal spans of the field of view, respectively.

7. The projection television of claim 1, wherein said screen (22) further comprises a light transmissive reinforcing support member (38).

8. The projection television of claim 1, wherein said at least one hologram (26) comprises a three dimensional holographic photo polymer material disposed on a substrate.

9. The projection television of claim 8, wherein said at least one hologram (26) comprises at least two stacked layers of photo polymer material on said substrate, together forming a three dimensional hologram.

10. The projection television of claim 1, in which said three-dimensional hologram (26) has the following performance specifications:

    Horizontal half viewing angle: 38° ± 3°
    Vertical half viewing angle: 10° ± 1°
    Screen gain: ≥8.

11. The projection television of claim 1, in which said plurality of projectors (14, 16, 18) comprise three projectors for forming a red image, a blue image and a green image.

12. The projection television of claim 11, wherein only said red (14) image projector has an occluded (44) lens.

13. A projection television, comprising:

    a plurality of image projectors (14, 16, 18) for forming respective images of different colors on a screen (22), each of said projectors having a lens (15, 17, 19) with an occluded center (44) wherein at least one of said projectors is oriented along an optical path converging with a path orthogonal to the screen, defining at least one angle of incidence;
    said screen (22) formed by at least one hologram (26) disposed on a substrate (24) superimposed on at least one light transmissive panel (38) said screen controlling the light dispersion of said displayed images and forming an interference array with optical properties varying horizontally and vertically across a field of view;
    such that the screen (22) exhibits an overall gain across the field of view of the screen and a color shift less than or equal to approximately five for all said angles of incidence in a range greater than 0° and less than or equal to approximately 30°, as determined by the maximum value obtained from at least one of the following expressions:

$$C(\Theta) = 20 \cdot \log_{10}\left(\frac{red(\Theta)}{blue(\Theta)}\right);$$

$$C(\Theta) = 20 \cdot \log_{10}\left(\frac{green(\Theta)}{blue(\Theta)}\right)$$

    where θ is any angle within a range horizontal viewing angles, C(θ) is the color shift at angle θ, red(θ) is the red luminance level at angle θ, blue(θ) is the blue luminance level at angle θ and green(θ) is the green luminance level at angle B,
    said screen (22) receiving an image from the occluded lenses (15, 17, 19) of the projectors (14, 16, 18) and displaying the image on a second side with the overall gain allowing for an increased brightness uniformity across the field of view of the screen (22).

14. The projection television of claim 13, wherein the screen (22) comprises at least two holograms stacked on one another, wherein said at least two holograms have gain variations across horizontal and vertical spans of the field of view, respectively.

15. The projection television of claim 13, wherein the screen (22) comprises at least one fresnel element superimposed on said at least one hologram (26).

16. The projection television of claim 13, wherein said at least one hologram (26) comprises a three dimensional holographic photo polymer material disposed on a substrate (24).

17. The projection television of claim 13, wherein said at least one hologram (26) comprises at least two stacked layers of photo polymer material on said substrate, together forming a three dimensional hologram.

18. The projection television of claim 13, in which said three-dimensional hologram (26) has the following performance specifications:

> Horizontal half viewing angle: $38° \pm 3°$
> Vertical half viewing angle: $10° \pm 1°$
> Screen gain: $\geq 8$.

19. The projection television of claim 13, in which said plurality of projectors (14, 16, 18) comprises three projectors for forming a red image, a blue image and a green image, and wherein only said red image projector (14) has an occluded lens.

**Patentansprüche**

1. Projektions-Fernsehgerät, umfassend:

> eine Mehrzahl von Bildprojektoren (14, 16, 18), von denen jeder ein Bild auf einem Schirm (22) erzeugt und eine Linse (15, 17, 19) mit einem abgedeckten mittleren Bereich (44) aufweist; und
> wobei der Schirm (22) durch wenigstens ein Hologramm (26) gebildet wird, das auf einem Substrat (24) überlagert auf wenigstens einer lichtdurchlässigen Platte (38) angeordnet ist, wobei der Schirm die Lichtstreuung der angezeigten Bilder steuert und der Schirm über einem Gesichtsfeld des Schirms einen Gesamtgewinn erzeugt, wodurch die Gleichmäßigkeit der Helligkeit über dem Gesichtsfeld des Schirms verbessert wird.

2. Projektions-Fernsehgerät nach Anspruch 1, bei dem der Schirm (22) wenigstens zwei übereinander angeordnete Hologramme umfaßt, wobei die wenigstens zwei Hologramme Gewinnänderungen über horizontalen bzw. vertikalenen Spannen des Gesichtsfeldes aufweisen.

3. Projektions-Fernsehgerät nach Anspruch 1, bei dem der Schirm (22) wenigstens ein Fresnel-Element umfaßt, das dem wenigstens einem Hologramm überlagert ist.

4. Projektions-Fernsehgerät nach Anspruch 3, das wenigstens zwei Fresnel-Elemente (29, 31) umfaßt, die hinter dem Hologramm (26) übereinander angeordnet sind, wobei die wenigstens zwei Fresnel-Elemente unabhängige Kollimationswirkungen haben, die überlagert sind.

5. Projektions-Fernsehgerät nach Anspruch 4, bei dem die wenigstens zwei Fresnel-Elemente (29, 31) veränderliche optische Eigenschaften über vertikalen bzw. horizontalen Spannen des Gesichtsfeldes haben.

6. Projektions-Fernsehgerät nach Anspruch 5, bei dem die wenigstens zwei Fresnel-Elemente (29, 31) veränderliche Brennweiten über vertikalen bzw. horizontalen Spannen des Gesichtsfeldes haben.

7. Projektions-Fernsehgerät nach Anspruch 1, bei dem der Schirm (22) ferner ein lichtdurchlässiges Verstärkungs-Tragelement (38) umfaßt.

8. Projektions-Fernsehgerät nach Anspruch 1, bei dem das wenigstens eine Hologramm (26) ein dreidimensionales holographisches Foto-Polymer-Material umfaßt, das auf einem Substrat angeordnet ist.

9. Projektions-Fernsehgerät nach Anspruch 8, bei dem das wenigstens eine Hologramm (26) wenigstens zwei übereinander angeordnete Schichten von Foto-Polymer-Material auf dem Substrat umfaßt, die zusammen ein dreidimensionales Hologramm bilden.

10. Projektions-Fernsehgerät nach Anspruch 1, bei dem das dreidimensionale Hologramm (26) die folgenden Ausführungsmerkmale hat:

> Halber horizontaler Sichtwinkel: $38° \pm 3°$
> Halber vertikaler Sichtwinkel: $10° \pm 1°$.
> Schirmgewinn: $\geq 8$.

**11.** Projektions-Fernsehgerät nach Anspruch 1, bei dem die Mehrzahl von Projektoren (14, 16, 18) drei Projektoren zur Bildung eines roten Bildes, eins blauen Bildes und eines grünen Bildes umfaßt.

**12.** Projektions-Fernsehgerät nach Anspruch 11, bei dem nur der rote (14) Bildprojektor eine abgedeckte Linse (44) hat.

**13.** Projektions-Fernsehgerät umfassend:

eine Mehrzahl von Bildprojektoren (14, 16, 18) zur Erzeugung entsprechender Bilder mit unterschiedlichen Farben auf einem Schirm (22), wobei jeder Projektor eine Linse (15, 17, 19) mit abgedeckter Mitte (44) aufweist, wobei wenigstens einer der Projektoren entlang eines optischen Weges orientiert ist, der mit einem Weg senkrecht zu dem Schirm konvergiert, wodurch wenigstens ein Auftreffwinkel definiert wird;
wobei der Schirm (22) durch wenigstens ein Hologramm (26) gebildet wird, das auf einem Substrat (24) überlagert auf wenigstens einer lichtdurchlässigen Platte (38) angeordnet ist, wobei der Schirm die Lichtstreuung der angezeigten Bilder steuert und eine Indifferenzanordnung mit optischen Eigenschaften bildet, die sich horizontal und vertikal über einem Blickfeld ändern;
so daß der Schirm (22) einen Gesamtgewinn über dem Blickfeld des Schirms und eine Farbverschiebung aufweist, die kleiner als oder gleich etwa 5 für alle Auftreffwinkel in einem Bereich größer als 0° und kleiner oder gleich etwa 30° ist, wie durch den Maximumwert bestimmt, der aus wenigstens einem der folgenden Ausdrücke erhalten wird:

$$C(\Theta) = 20 \cdot \log_{10}\left(\frac{Rot(\Theta)}{Blau(\Theta)}\right); \qquad (I)$$

$$C(\Theta) = 20 \cdot \log_{10}\left(\frac{Grün(\Theta)}{Blau(\Theta)}\right); \qquad (II)$$

worin ist: θ irgendein Winkel innerhalb eines Bereichs von horizontalen Betrachtungswinkeln, C(θ) die Farbverschiebung beim Winkel θ, Rot(θ) der rote Luminanzpegel beim Winkel θ, Blau (θ) der blaue Luminanzpegel beim Winkel θ, und Grün(θ) der grüne Luminanzpegel beim Winkel θ;
wobei der Schirm (22) ein Bild von den abgedeckten Linsen (15, 17, 19) der Projektoren (14, 16, 18) empfängt und das Bild auf einer zweiten Seite mit dem gesamten Gewinn anzeigt, was zu einer erhöhten Gleichmäßigkeit der Helligkeit über dem Gesichtsfeld des Schirms (22) führt.

**14.** Projektions-Fernsegerät nach Anspruch 13, bei dem der Schirm (22) wenigstens zwei übereinander angeordnete Hologramme umfaßt, die Gewinnänderungen über horizontalen bzw. vertikalen Spannen des Gesichtsfeldes aufweisen.

**15.** Projektions-Fernsehgerät nach Anspruch 13, bei dem der Schirm wenigstens ein Fresnel-Element umfaßt, das dem wenigstens einen Hologramm (26) überlagert ist.

**16.** Projektions-Fernsehgerät nach Anspruch 13, bei dem das wenigstens eine Hologramm (26) ein dreidimensionales holographisches Foto-Polymer-Material umfaßt, das auf einem Substrat (24) angeordnet ist.

**17.** Projektions-Fernsehgerät nach Anspruch 13, bei dem wenigtens ein Hologramm (26) wenigstens zwei übereinander angeordnete Schichten von Foto-Polymer-Material auf dem Substrat umfaßt, die zusammen ein dreidimensionales Hologramm bilden.

**18.** Projektions-Fernsehgerät nach Anspruch 13, bei dem das dreidimensionale Hologramm (26) die folgenden Ausführungs-Spezifikationen hat:

halber horizontaler Betrachtungswinkel: 38° ± 3°
halber vertikaler Betrachtungswinkel: 10° ± 1°
Schirm-Gewinn: ≥ 8.

**19.** Projektions-Fernsehgerät nach Anspruch 13, bei dem die Mehrzahl von Projektoren (14, 16, 18) drei Projektoren zur Bildung eines roten Bildes, eines blauen Bildes und eines grünen Bildes umfaßt, und bei dem nur der rote Bildprojektor (14) eine abgedeckte Linse hat.

## Revendications

**1.** Téléviseur à projection, comprenant :

une pluralité de projecteurs d'images (14, 16, 18), chaque projecteur formant une image sur un écran (22) et possédant une lentille (15, 17, 19) dotée d'une zone centrale masquée (44) ; et
l'écran (22) étant formé par au moins un hologramme (26) disposé sur un substrat (24) superposé sur au moins un panneau transmettant la lumière (38), ledit écran régulant la dispersion de la lumière desdites images affichées, dans lequel ledit écran produit un gain global d'un bout à l'autre d'un champ visuel de l'écran de façon à améliorer l'uniformité de la luminosité d'un bout à l'autre dudit champ visuel de l'écran.

2. Téléviseur à projection selon la revendication 1, dans lequel l'écran (22) comprend au moins deux hologrammes empilés l'un sur l'autre, dans lequel lesdits au moins deux hologrammes présentent des variations de gain d'un bout à l'autre d'étendues horizontale et verticale du champ visuel, respectivement.

3. Téléviseur à projection selon la revendication 1, dans lequel l'écran (22) comprend au moins un élément de Fresnel superposé sur ledit au moins un hologramme.

4. Téléviseur à projection selon la revendication 3, comprenant au moins deux éléments de Fresnel (29, 31) empilés derrière l'hologramme (26), les au moins deux éléments de Fresnel ayant des effets de collimation indépendants superposés.

5. Téléviseur à projection selon la revendication 4, dans lequel les au moins deux éléments de Fresnel (29, 31) présentent des propriétés optiques variables d'un bout à l'autre d'étendues horizontale et verticale du champ visuel, respectivement.

6. Téléviseur à projection selon la revendication 5, dans lequel les au moins deux éléments de Fresnel (29, 31) présentent une longueur focale variable d'un bout à l'autre d'étendues horizontale et verticale du champ visuel, respectivement.

7. Téléviseur à projection selon la revendication 1, dans lequel ledit écran (22) comprend en outre un élément support de renfort transmettant la lumière (38).

8. Téléviseur à projection selon la revendication 1, dans lequel ledit au moins un hologramme (26) comprend une matière photopolymère holographique tridimensionnelle disposée sur un substrat.

9. Téléviseur à projection selon la revendication 8, dans lequel ledit au moins un hologramme (26) comprend au moins deux couches de matière photopolymère empilées sur un substrat, formant ensemble un hologramme tridimensionnel.

10. Téléviseur à projection selon la revendication 1, dans lequel ledit hologramme tridimensionnel (26) présente les spécifications suivantes en matière de comportement :

Demi-angle d'observation horizontal : 38° ± 3°,

Demi-angle d'observation vertical : 10° ± 1°,
Gain de l'écran : ≥ 8.

11. Téléviseur à projection selon la revendication 1, dans lequel ladite pluralité de projecteurs (14, 16, 18) comprend trois projecteurs pour former une image rouge, une image bleue et une image verte.

12. Téléviseur selon la revendication 11, dans lequel seul ledit projecteur d'images (14) rouges possède une lentille (44) masquée.

13. Téléviseur à projection, comprenant :

une pluralité de projecteurs d'images (14, 16, 18) pour former des images respectives de différentes couleurs sur un écran (22), chacun desdits projecteurs possédant une lentille (15, 17, 19) dotée d'un centre masqué (44), dans lequel au moins un desdits projecteurs est orienté le long d'un axe optique convergeant avec un chemin orthogonal à l'écran, en définissant au moins un angle d'incidence ;
ledit écran (22) étant formé par au moins un hologramme (26) disposé sur un substrat (24) superposé sur au moins un panneau transmettant la lumière (38), ledit écran régulant la dispersion de la lumière desdites images affichées et formant un réseau d'interférence dont les propriétés optiques varient horizontalement et verticalement d'un bout à l'autre d'un champ visuel ;
de telle sorte que l'écran (22) présente un gain global d'un bout à l'autre du champ visuel et un décalage chromatique inférieur ou égal à approximativement cinq pour tous lesdits angles d'incidence dans un intervalle incorporant les valeurs supérieures à 0° et inférieures ou égales à approximativement 30°, tel que déterminé par la valeur maximale obtenue à partir d'au moins une des expressions suivantes :

$$C(\Theta) = 20 \cdot \log_{10}(\frac{\text{rouge}(\Theta)}{\text{bleu}(\Theta)});$$

$$C(\Theta) = 20 \cdot \log_{10}(\frac{\text{vert}(\Theta)}{\text{bleu}(\Theta)})$$

dans lesquelles θ est un angle quelconque dans un intervalle d'angles d'observation horizontaux, C(θ) est le décalage chromatique à l'angle θ, rouge(θ) est le niveau de luminance des rouges à l'angle θ, bleu(θ) est le niveau de luminance des bleus à l'angle θ, et vert(θ) est le niveau de luminance des verts à l'angle θ, ledit écran (22) recevant une image provenant des lentilles masquées (15, 17, 19) des projecteurs (14, 16, 18) et affichant l'image sur un deuxième côté, le gain global permettant d'améliorer l'uniformité de la luminosité d'un bout à l'autre du champ visuel de l'écran (22).

14. Téléviseur à projection selon la revendication 13, dans lequel l'écran (22) comprend au moins deux hologrammes empilés l'un sur l'autre, dans lequel lesdits au moins deux hologrammes présentent des variations de gain d'un bout à l'autre d'étendues horizontale et verticale du champ visuel, respectivement.

15. Téléviseur à projection selon la revendication 13, dans lequel l'écran (22) comprend au moins un élément de Fresnel superposé sur ledit au moins un hologramme (26).

16. Téléviseur à projection selon la revendication 13, dans lequel ledit au moins un hologramme (26) comprend une matière photopolymère holographique tridimensionnelle disposée sur un substrat (24).

17. Téléviseur à projection selon la revendication 13, dans lequel ledit au moins un hologramme (26) comprend au moins deux couches de matière photopolymère empilées sur un substrat, formant ensemble un hologramme tridimensionnel.

18. Téléviseur à projection selon la revendication 13, dans lequel ledit hologramme tridimensionnel (26) présente les spécifications suivantes en matière de comportement :

> Demi-angle d'observation horizontal : 38° ± 3°,
> Demi-angle d'observation vertical : 10° ± 1°,
> Gain de l'écran : ≥ 8.

19. Téléviseur à projection selon la revendication 13, dans lequel ladite pluralité de projecteurs (14, 16, 18) comprend trois projecteurs pour former une image rouge, une image bleue et une image verte, et dans lequel seul ledit projecteur d'images (14) rouges possède une lentille (44) masquée.

FIG. 1

FIG. 2

FIG. 3

FIG. 4

FIG. 5

EP 1 051 858 B1

FIG. 6

## FIG. 7

| POINT | % CTR W/O OBJECT | % CTR WITH OBJECT | % IMPROVEMENT |
|---|---|---|---|
| 3 O'CLOCK | 28 | 34 | 21 |
| 9 O'CLOCK | 22 | 27 | 23 |
| 6 O'CLOCK | 33 | 43 | 30 |
| 12 O'CLOCK | 41 | 51 | 24 |
| 2 O'CLOCK CORNER | 9 | 11 | 22 |
| 4 O'CLOCK CORNER | 6 | 8 | 33 |
| 8 O'CLOCK CORNER | 5 | 7 | 40 |
| 10 O'CLOCK CORNER | 8 | 9 | 12 |

FIG. 8